(19) Europäisches Patentamt / European Patent Office / Office européen des brevets

(11) **EP 1 096 227 B1**

(12) **FASCICULE DE BREVET EUROPEEN**

(45) Date de publication et mention
de la délivrance du brevet:
**03.07.2013   Bulletin 2013/27**

(51) Int Cl.:
***G01C 19/72*** *(2006.01)*

(21) Numéro de dépôt: **00402953.4**

(22) Date de dépôt: **25.10.2000**

(54) **Gyromètre interferometrique en anneau à fibre optique, à hautes performances**

Interferometrischer faseroptischer Ringkreisel mit hoher Leistung

High performance, interferometric fiber optic ring gyroscope

(84) Etats contractants désignés:
**DE FR GB**

(30) Priorité: **29.10.1999   FR 9913585**

(43) Date de publication de la demande:
**02.05.2001   Bulletin 2001/18**

(73) Titulaire: **SAGEM Défense Sécurité**
**75015 Paris (FR)**

(72) Inventeurs:
• **Caron, Jean Michel**
**95210 Saint Gratien (FR)**
• **Dousseau, Philippe**
**95420 Magny en Vexin (FR)**

(74) Mandataire: **Cabinet Plasseraud**
**52, rue de la Victoire**
**75440 Paris Cedex 09 (FR)**

(56) Documents cités:
**US-A- 5 394 242     US-A- 5 453 836**
**US-A- 5 684 590**

**Description**

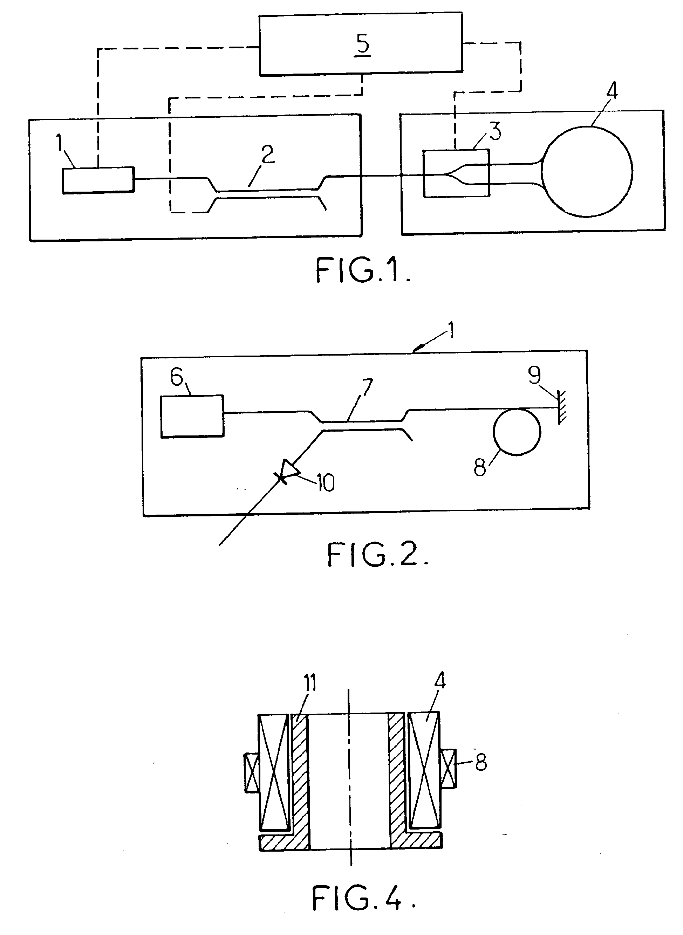

La présente invention concerne des perfectionnements apportés aux gyromètres en anneau à fibre optique, qui, comme illustré à la figure 1 des dessins ci-annexés, comprennent une source de rayonnement électromagnétique 1 reliée à un coupleur 2 lui-même raccordé à un séparateur 3 ; les deux branches du séparateur 3 sont raccordées respectivement aux deux extrémités d'un guide en anneau constitué par une bobine 4 de fibre optique pouvant avoir un diamètre d'au moins 60 mm ; le fonctionnement du gyromètre est assuré par un module électronique 5 raccordé à la source 1, au séparateur 3 et à la sortie du coupleur 2 où sont détectées les interférences des ondes contra-propagatives ayant circulées dans la bobine 4.

Plus particulièrement l'invention s'intéresse à ceux de ces gyromètres qui sont de type interférométrique (IFOG) et qui ont des performances élevées, dans lesquels la source 1 de rayonnement électromagnétique comprend, comme illustré à la figure 2, un générateur de rayonnement électromagnétique 6 tel qu'une diode DEL, qui est relié à un coupleur 7 lui-même raccordé à une fibre optique dopée 8, enroulée sur plusieurs spires ayant un diamètre d'au moins 60 mm, dont l'extrémité libre est connectée à un miroir 9 ; la sortie du coupleur 7 est raccordée, à travers une diode optique 10, à l'utilisateur (coupleur 2 de la figure 1). Une source de ce type équipée d'une fibre optique dopée à l'erbium émet un rayonnement ayant une longueur d'onde proche de 1,55 μm.

L'une des difficultés rencontrées dans les gyromètres interférométriques de ce type, pour la mesure des rotations de la bobine, réside dans la stabilité du facteur d'échelle. Ce facteur est le coefficient reliant le déphasage de Sagnac à la vitesse de rotation à mesurer, lequel coefficient a pour valeur :

$$K_s = \frac{2\pi . RL}{\overline{\lambda} . c}$$

avec c = vitesse de la lumière
$\overline{\lambda}$ = longueur d'onde moyenne de la source lumineuse
R = rayon moyen de la bobine
L = longueur totale de la fibre optique bobinée.

Les facteurs R et L augmentent avec la température, de même que le facteur $\overline{\lambda}$.

Toutefois, le produit RL et le facteur $\overline{\lambda}$ ne varient pas de la même quantité avec la température, ce qui induit une variation du facteur $K_s$ avec la température.

Or la connaissance de la valeur du coefficient $K_s$ détermine la précision du gyromètre à fibre optique.

Il est donc du plus grand intérêt de pouvoir déterminer la valeur exacte du coefficient $K_s$ lorsque la température évolue. A cette fin, on modélise les variations du produit RL et du facteur $\overline{\lambda}$ en fonction de la température, afin de corriger le coefficient $K_s$ lors de l'évolution de la température au cours du fonctionnement du gyromètre.

Or il faut noter que les grandeurs R et L sont des paramètres de la bobine, alors que $\overline{\lambda}$ est un paramètre de la source lumineuse. La bobine et la source lumineuse sont distinctes physiquement l'une de l'autre et peuvent être éloignées l'une de l'autre. Il en résulte qu'elles peuvent être portées à des températures différentes lorsque le gyromètre fonctionne. La correction du coefficient $K_s$ en fonction de la température nécessiterait alors la connaissance de deux modèles (RL en fonction de la température, et $\overline{\lambda}$ en fonction de la température) et de deux valeurs de température (celle de la bobine eL celle de la source lumineuse).

Cette duplication des modèles double les erreurs de correction, alors même que le but de la correction est d'augmenter la précision du gyromètre

Le document US 5 394 242 divulgue un agencement de source et de capteur en anneau résonant à fibre optique, dans lequel des anneaux sont formés de fibres contiguës qui sont enroulées en un enroulement unique, de façon que toute variation thermique sur l'un des anneaux affecte également l'autre anneau.

L'invention a donc pour but de proposer une solution originale et simple qui permette d'accroître la précision du gyromètre tout en mettant en oeuvre des moyens simples et peu onéreux qui n'influent pas sensiblement sur le coût d'ensemble du gyromètre interférométrique.

A cette fin, un gyromètre interférométrique à hautes performances tel que mentionné dans le préambule de la revendication 1 se caractérise, étant agencé conformément à l'invention, par les dispositions énoncées dans la partie caractérisante de la revendication 1.

Avantageusement, la fibre optique dopée de la source peut être enroulée à spires jointives afin d'obtenir une uniformité thermique optimale. De façon pratique, la fibre optique dopée enroulée est collée sur la bobine, notamment avec la même colle que celle ayant servi à constituer la bobine.

La solution conforme à l'invention se révèle particulièrement efficace car c'est la fibre dopée de la source qui induit les plus fortes variations de $\overline{\lambda}$ avec la température : désormais la fibre dopée et la bobine sont sensiblement à la même température et il n'y a à connaître qu'un seul modèle (la quantité RL/$\overline{\lambda}$ en fonction de la température) .

La solution conforme à l'invention se révèle en outre économique car le montage de la bobine demeure inchangé par rapport au montage antérieur : la bobine est collée par son centre sur un support métallique et un capteur de température est fixé sur ce support. Les processus et matériels de montage n'ont donc pas besoin d'être modifiés.

En outre, la solution conforme à l'invention conduit, incidemment, à un gain substantiel de place. En effet, en raison de leurs caractéristiques mécaniques, les fibres optiques ne peuvent pas être courbées avec des rayons de courbure trop faibles (risque de casse). En pratique, la bobine de fibre optique de l'interféromètre présente un diamètre de l'ordre de 70 mm et la fibre dopée ne doit pas présenter des rayons de courbure inférieurs à 60 mm. Au bout du compte, ces deux enroulements de fibre optique sont relativement encombrants et, étant incorporés dans deux boîtiers distincts avec les organes afférents respectifs, ces boîtiers sont implantés côte à côte à leur emplacement d'utilisation en occupant une place importante, alors que, en général, la place disponible pour les applications envisagées (missiles par exemple) est comptée. Le fait de réunir l'un sur l'autre les deux enroulements conduit à un composant dont le volume n'excède pas beaucoup le volume de la bobine seule (la fibre dopée est relativement fine et son nombre de tours d'enroulement est faible) et qui peut être logé dans le même boîtier qui recevait auparavant la bobine seule ; par contre, l'autre boîtier, débarrassé de la fibre dopée, peut être notablement plus petit.

De plus, on peut encore améliorer la stabilité du coefficient de Sagnac en fonction de la température ( ou à tout le moins réduire sa variation à un minimum) en réalisant la source lumineuse et/ou la bobine de mesure de façons telles que les évolutions de facteur d'échelle générées, en raison de variations de la température, par l'un et/ou l'autre de ces deux composants se compensent au moins partiellement.

L'invention sera mieux comprise à la lecture de la description détaillée qui suit de certains modes de réalisation préférés donnés uniquement à titres d'exemples purement illustratifs. Dans cette description, on se réfère aux dessins annexés sur lesquels :

- la figure 3 est un schéma synoptique illustrant un gyromètre interférométrique en anneau à fibre optique à hautes performances agencé conformément à l'invention ;
- la figure 4 est une vue schématique en coupe diamétrale d'un mode de réalisation préféré d'une partie du gyromètre de la figure 3.

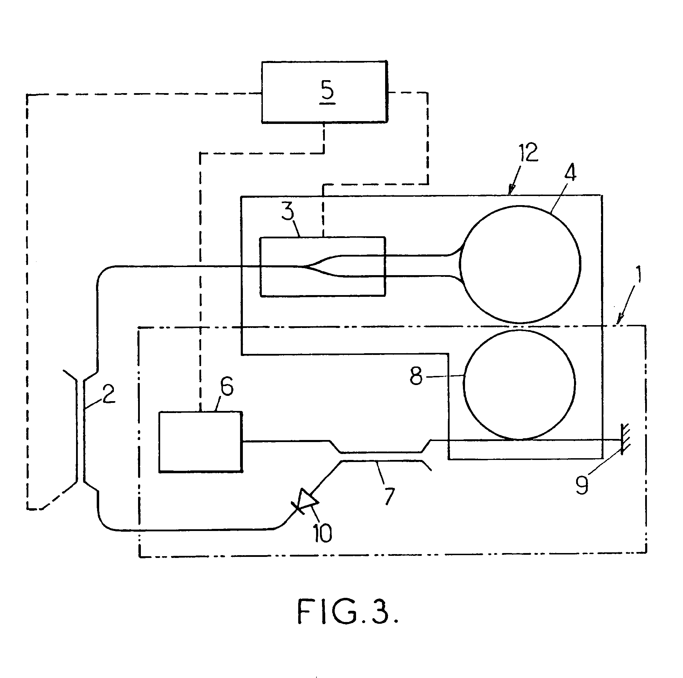

On se reporte maintenant à la figure 3 qui montre un gyromètre interférométrique en anneau à fibre optique à hautes performances qui conserve les mêmes composants que le gyromètre interférométrique de l'art antérieur illustré aux figures 1 et 2, ces composants étant désignés à l'aide des mêmes références numériques qu'aux figures 1 et 2.

Afin de ramener à l'unité le nombre des modèles thermiques à connaître pour assurer une compensation précise du coefficient de Sagnac $K_s$ en fonction de la température (grandeur $RL/\overline{\lambda}$ en fonction de la température), on prévoit, conformément à l'invention, que la bobine de fibre optique 4 de l'interféromètre et la fibre dopée 8 (en l'occurrence fibre dopée à l'erbium) soient disposées à proximité immédiate l'une de l'autre et en contact thermique l'une de l'autre.

Grâce à cet agencement, on est assuré de parvenir à une sensible égalité des températures de la bobine et de la fibre dopée, ainsi qu'à des évolutions identiques, en sens et en grandeur, de ces températures.

En pratique, la solution la plus simple consiste, comme illustré à la figure 4, à réunir physiquement la bobine 4 et la fibre dopée 8 et à enrouler ladite fibre dopée 8 sur la bobine 4 de sorte que la transmission thermique de l'une à l'autre soit aussi facile et aussi totale que possible. Pour assurer le contact thermique requis, on peut prévoir que la fibre dopée 8, enroulée sur la bobine, soit collée sur celle-ci avec la même colle que celle solidarisant les spires de la fibre optique de la bobine.

Pour obtenir que la fibre dopée 8 soit à la température moyenne de la bobine, on prévoit qu'elle est enroulée sur la région médiane ou centrale (milieu de la hauteur) de la bobine.

Le montage le plus aisé en pratique consiste à enrouler la fibre dopée autour de la région médiane de la bobine, c'est-à-dire extérieurement à celle-ci.

De plus, pour obtenir une température homogène de la fibre dopée 8, on enroule celle-ci à spires jointives.

En définitive, l'ensemble se présente comme illustré à la figure 4. La fibre dopée 8 est enroulée et collée autour de la bobine 4, puis la bobine 4 montée sur un noyau métallique 11 (par exemple aluminium) sur lequel elle est collée et un capteur de température (non montré) est fixé sur ce noyau. Le processus de montage de la bobine n'est pas modifié.

On peut encore améliorer la stabilité du coefficient de Sagnac $K_s$ en fonction de la température (ou à tout le moins réduire sa variation à un minimum) en réalisant la source lumineuse à fibre dopée et/ou la bobine de mesure de façons telles que les évolutions de facteur d'échelle générées, en raison de variations de la température, par l'un et/ou l'autre de ces deux composants se compensent au moins partiellement (effet, sur le facteur d'échelle, de $\overline{\lambda}$ = f (T) de la source opposé à celui de RL = g(T) de la bobine de mesure).En particulier, le facteur RL = g(T) de la bobine de mesure étant a priori relativement difficile à maîtriser, on pourra chercher préférentiellement à concevoir une source lumineuse telle que le facteur $\overline{\lambda}$ = f(T) compense, au moins partiellement, le facteur RL = g(T) constaté de la bobine de mesure. L'homme du métier est en mesure de réaliser une source lumineuse à fibre optique dopée propre à présenter les caractéristiques requises, notamment par un choix des matériaux entrant dans la constitution de la fibre.

L'acquisition du modèle est effectuée avec le gyromètre en fonctionnement. La tête optique 12 (sous-ensemble interférométrique englobant le séparateur 3, la bobine 4 et la fibre dopée 8) est placée dans une enceinte thermique à température contrôlable. Le gyromètre est mis en rotation avec une vitesse prédéterminée, en même temps que l'on fait varier la température. Les moyens de contrôle 5 mesurent, lors d'une rotation, une tension proportionnelle au déphasage de Sagnac induit par la rotation. La vitesse de rotation étant connue, il est possible d'associer une valeur du coefficient $K_s$ à chaque température.

Du fait que seule la tête optique 12 est placée dans l'enceinte thermique, à l'exclusion du reste de l'appareil, on est assuré que ce sont bien les valeurs de la grandeur $RL/\overline{\lambda}$, et elles seules, qui ont été relevées en fonction de la température.

La variation de la grandeur $RL/\overline{\lambda}$ en fonction de la température est traduite de façon approchée par un polynôme dont on calcule les coefficients.

Ensuite la mise en oeuvre du modèle thermique est effectuée par les moyens de contrôle 5. Les coefficients du modèle thermique sont placés en mémoire et, en cours de fonctionnement, la valeur du coefficient $K_s$ est corrigée en fonction de la température mesurée sur la tête optique. On améliore ainsi la précision du gyromètre.

On notera également un avantage supplémentaire procuré par le montage conforme à l'invention, avantage qui réside dans la réduction de sensiblement la moitié de la surface occupée par la bobine 4 et la fibre dopée enroulée 8, du fait que la bobine 4 équipée de l'enroulement de fibre dopée 8 possède un encombrement qui n'est guère supérieur à celui de la bobine 4 seule. Cet agencement libère ainsi le volume qu'occuperait la fibre dopée seule, dans un environnement où la place disponible est toujours recherchée.

**Revendications**

**1.** Gyromètre interférométrique en anneau à fibre optique, comprenant une bobine de fibre optique (4), une source de rayonnement électromagnétique (1) qui comporte une fibre optique dopée (8) et qui est munie d'un séparateur pour envoyer dans la bobine (4) deux ondes contra-propagatives en provenance de la source (1), et un détecteur d'interférence (2) recevant les ondes contra-propagatives, la bobine (4) et la fibre optique dopée (8) étant disposées à proximité immédiate l'une de l'autre et en contact thermique étroit l'une avec l'autre, **caractérisé en ce que** la fibre optique dopée (8) de la source et enroulée extérieurement sur la région médiane de la bobine de fibre optique (4).

**2.** Gyromètre interférométrique selon la revendication 1, **caractérisé en ce que** la fibre optique dopée (8) est enroulée à spires jointives.

**3.** Gyromètre interféremétrique selon la revendication 1 ou 2, **caractérisé en ce que** la fibre optique dopée (8) enroulée est collée sur la bobine (4).

**4.** Gyromètre interférométrique en anneau à fibre optique, à haute performance, selon l'une quelconque des revendications précédentes, **caractérisé en ce que** la fibre optique (8) de la source (1) est dopée à l'erbium.

**5.** Gyromètre interférométrique selon l'une quelconque des revendications précédentes, **caractérisé en ce que** la source lumineuse et/ou la bobine sont réalisées de façons telles que les évolutions de facteur d'échelle générées, en raison de variations de la température, par l'un et/ou l'autre de ces composants se compensent au moins partiellement, ce grâce à quoi la variation du coefficient de Sagnac $K_a$ en fonction de la température est réduite au moins partiellement.

**Patentansprüche**

**1.** Interferometrischer Ringgyrometer aus Glasfaser, umfassend eine Glasfaserspule (4), eine elektromagnetische Strahlungsquelle (1), die eine dotierte Glasfaser (8) umfasst und die mit einer Trennvorrichtung versehen ist, um zwei gegenläufige Wellen aus der Quelle (1) in die Spule (4) zu schicken, und einen Interferenzdetektor (2), der die gegenläufigen Wellen empfängt, wobei die Spule (4) und die dotierte Glasfaser (8) in unmittelbarer Nähe zueinander und in engem thermischen Kontakt miteinander angeordnet sind, **dadurch gekennzeichnet, dass** die dotierte Glasfaser (8) der Quelle außen um die Mittelregion der Glasfaserspule (4) gewickelt ist.

**2.** Interferometrischer Gyrometer nach Anspruch 1, **dadurch gekennzeichnet, dass** die dotierte Glasfaser (8) mit aneinander anliegenden Windungen aufgewickelt ist.

**3.** Interferometrischer Gyrometer nach Anspruch 1 oder 2, **dadurch gekennzeichnet, dass** die aufgerollte dotierte Glasfaser (8) auf die Spule (4) geklebt ist.

**4.** Interferometrischer Hochleistungsringgyrometer aus Glasfaser nach einem beliebigen der vorherigen Ansprüche, **dadurch gekennzeichnet, dass** die Glasfaser (8) der Quelle (1) mit Erbium dotiert ist.

**5.** Interferometrischer Gyrometer nach einem beliebigen der vorherigen Ansprüche, **dadurch gekennzeichnet, dass** die Lichtquelle und/oder die Spule so ausgestaltet sind, dass die aufgrund von Temperaturänderungen von der einen und/oder der anderen dieser Komponenten erzeugten Skalierfaktorentwicklungen sich zumindest teilweise kompensieren, wodurch die Variation des Sagnac-Koeffizienten ($K_a$) als Funktion der Temperatur zumindest teilweise reduziert wird.

**Claims**

1. Interferometric fibre optic ring gyrometer, comprising a fibre optic coil (4), an electromagnetic radiation source (1) comprising a doped optical fibre (8) and which is equipped with a separator for emitting two counter-propagating waves from the source (1) to the coil (4), and an interference detector (2) receiving the counter-propagating waves, the coil (4) and the doped optical fibre (8)being disposed in direct proximity to one another and in close thermal contact with one another, **characterised in that** the doped optical fibre (8) of the source is wound externally around the median region of the fibre optic coil (4).

2. Interferometric gyrometer as claimed in claim 1, **characterised in that** the doped optical fibre (8) is wound with close wound coils.

3. Interferometric gyrometer as claimed in claim 1 or 2, **characterised in that** the wound doped optical fibre (8) is glued to the coil (4).

4. High-performance interferometric fibre optic ring gyrometer as claimed in any one of the preceding claims, **characterised in that** the optical fibre (8) of the source (1) is doped with erbium.

5. Interferometric gyrometer as claimed in any one of the preceding claims, **characterised in that** the light source and/or the coil are configured so that the changes in scale factor generated due to variations in temperature by one and/or the other of these components are at least partially compensated, as a result of which the variation in the Sagnac coefficient $K_s$ as a function of temperature is at least partially reduced.

FIG.1.

FIG.2.

FIG.4.

FIG.3.

**EP 1 096 227 B1**

## RÉFÉRENCES CITÉES DANS LA DESCRIPTION

### Documents brevets cités dans la description

- US 5394242 A